# EUROPÄISCHE PATENTSCHRIFT

(11) **EP 4 038 351 B1**
(45) Veröffentlichungstag und Bekanntmachung des Hinweises auf die Patenterteilung: **30.10.2024**
(21) Anmeldenummer: 20781513.5
(22) Anmeldetag: 29.09.2020
(51) Int. Cl.: G01F 1/28, G01F 1/00, G01F 1/20, G01F 3/16, G01F 23/20, E03F 5/04

(54) **GULLY MIT EINEM FLUIDABLAUF MIT EINER VORRICHTUNG ZUR MESSUNG EINER DURCHFLUSSRATE EINES FLUIDS UND VERFAHREN ZUR MESSUNG EINER DURCHFLUSSRATE**
GULLY COMPRISING A FLUID OUTLET COMPRISING A DEVICE FOR MEASURING A FLOW RATE OF A FLUID, AND METHOD FOR MEASURING A FLOW RATE
PUISARD COMPRENANT UNE SORTIE DE FLUIDE COMPRENANT UN DISPOSITIF DE MESURE DE DÉBIT D'UN FLUIDE, ET PROCÉDÉ DE MESURE D'UN DÉBIT

(30) Priorität: 01.10.2019 DE 102019126479
(43) Veröffentlichungstag der Anmeldung: 10.08.2022
(73) Patentinhaber: ACO Ahlmann SE & Co. KG, 24782 Büdelsdorf (DE)
(72) Erfinder: MACOUN, Petr, 582 23 Havlickova Borová (CZ)
(74) Vertreter: Meissner Bolte Partnerschaft mbB
(86) Internationale Anmeldenummer: PCT/EP2020/077200
(87) Internationale Veröffentlichungsnummer: WO 2021/063931

(56) Entgegenhaltungen:
- EP-A1- 0 164 442
- CN-A- 105 424 102
- US-A- 4 149 411

## Beschreibung

Die Erfindung betrifft einen Gully mit einem Fluidablauf mit einer Vorrichtung zur Messung einer Durchflussrate gemäß dem Oberbegriff von Patentanspruch 1. Ferner betrifft die Erfindung ein Verfahren zur Messung einer Durchflussrate gemäß dem Oberbegriff von Patentanspruch 11.

Eine derartige Vorrichtung zur Messung einer Durchflussrate ist beispielsweise aus der DE 10 2005 052 953 A1 bekannt und wird zur volumenmäßigen Ermittlung der Durchflussrate von Regenwasser in einem Abwasserkanalnetz eingesetzt.

In der Praxis ist es wichtig Einlaufmengen in das Abwasserkanalnetz identifizieren und überwachen zu können. Dafür muss die durchschnittliche Durchflussrate des Oberflächenwassers an jedem einzelnen Gully und/oder Kontrollschacht empirisch ermittelt bzw. gemessen werden.

Die aus der DE 10 2005 052 953 A1 bekannte Vorrichtung ermittelt die Durchflussrate des Oberflächenwassers, indem sie das in einen Kontrollschacht eingedrungene Oberflächenwasser mittels einer Messtrommel, die mehrere Messkammern aufweist, in einem diskontinuierlichem Vorgang auffängt und volumenmäßig misst, wobei die Anzahl der Füllungen der Messkammern über einen vorbestimmten Zeitraum gezählt werden. Die dortige Vorrichtung weist mehrere Dauermagnete auf, welche die Messtrommel in einer Halterung magnetisch festhalten. Durch das Füllen der Messkammer mit Oberflächenwasser werden die Haltekräfte der Dauermagnete aufgrund des größeren Gewichts der gefüllten Messkammer überschritten, so dass die drehbar gelagerte Messtrommel in Rotation versetzt wird und dadurch eine Entleerung der mit Oberflächenwasser gefüllten Messkammer stattfindet.

Der Nachteil der aus DE 10 2005 052 953 A1 bekannten Vorrichtung besteht darin, dass die volumenmäßige Ermittlung der Durchflussrate des Oberflächenwassers durch die Zählung der Füllungen bzw. Entleerungen der Messkammern aufwändig und kostenintensiv ist. Des Weiteren stellt sich aufgrund der diskontinuierlichen Rotation der Messtrommel und der dadurch entstehenden Fliehkräfte, eine Pendelbewegung bzw. Schaukelbewegung des Oberflächenwassers in der Messtrommel ein, was zu einer ungenauen und darüber hinaus lediglich nicht-kontinuierlich möglichen Messung der Durchflussrate führt. CN 105 424 102 A offenbart einen Gully mit einem Durchflussmesser, bei dem der Durchfluss auf eine Prallplatte auftrifft und der eine Wägezelle umfasst, die unterhalb der Prallplatte angeordnet ist.

Der Erfindung liegt die Aufgabe zu Grunde, eine Vorrichtung anzugeben, die eine kostengünstige und präzise Messung einer Durchflussrate eines Fluids, insbesondere von Oberflächenwasser durch einen Fluidablauf ermöglicht. Ferner besteht die Aufgabe der Erfindung darin, einen Gully mit einem Fluidablauf mit einer Vorrichtung sowie ein Verfahren zur Messung einer Durchflussrate durch einen Fluidablauf eines Gullys anzugeben.

Erfindungsgemäß wird diese Aufgabe im Hinblick auf den Gully mit einem Fluidablauf mit einer Vorrichtung zur Messung einer Durchflussrate eines Fluids, insbesondere von Oberflächenwasser, durch den Gegenstand gemäß Patentanspruch 1, sowie im Hinblick auf ein Verfahren zur Messung einer Durchflussrate durch den Gegenstand gemäß Patentanspruch 11 gelöst.

Insbesondere wird die Aufgabe durch einen Gully mit einem Fluidablauf mit einer Vorrichtung zur Messung einer Durchflussrate eines Fluids, insbesondere von Oberflächenwasser durch einen Fluideinlauf gelöst, wobei die Vorrichtung einen Fluideinlauf mit einem Rohrabschnitt, eine Prallplatte und eine Messeinheit zur Bestimmung einer Durchflussmenge aufweist, wobei die Messeinheit oberhalb der, im Wesentlichen senkrecht zu einer Strömungsrichtung angeordneten, Prallplatte ortsfest angeordnet und zugfest, insbesondere starr, mit der Prallplatte verbunden ist. Ferner weist die Messeinheit eine Kraftmessvorrichtung zur Messung einer durch das Fluid auf die Prallplatte wirkende Gewichtskraft auf.

Ein wesentlicher vorteilhafter Punkt der Erfindung besteht darin, dass die erfindungsgemäße Vorrichtung eine kontinuierliche Echtzeitmessung der Durchflussrate des Fluids, insbesondere des Oberflächenwassers, durch einen Fluidablauf mit einer, aufgrund sehr präziser Messergebnisse, hohen Empfindlich- und Genauigkeit ermöglicht. Somit können erfindungsgemäß Durchflussraten durch Fluidabläufe, wie beispielsweise Gullys und Kontrollschächte, in Echtzeit überwacht werden, so dass ein Eingriff, sofern notwendig, zeitnah zu einem Ereignis und somit sehr schnell erfolgen kann.

Die erfindungsgemäß sehr präzise Messung der Durchflussrate durch einen Fluidablauf ist erfindungsgemäß möglich, da die erfindungsgemäße Vorrichtung mit dem Prinzip einer Zugwaage, insbesondere dem Prinzip einer Zugkraftmessung arbeitet. Dies bedeutet, dass die Durchflussrate des Fluids erfindungsgemäß nicht, wie beim Stand der Technik mittelbar, sondern unmittelbar und direkt über die durch das abfließende Fluid auf die Prallplatte wirkende Zug-, respektive Gewichtskraft, ermittelt wird.

Die gemessene Zugkraft entspricht dabei einer Gewichtskraft, die aus der Eigenmasse des Fluids resultiert und abhängig von der Spiegelhöhe des Fluids bzw. der Wasserstandshöhe des abfließenden Oberflächenwassers ist. Die resultierende Gewichts- bzw Zugkraft lässt sich hierbei unmittelbar sowohl primär auf den hydrostatischen als auch sekundär auf den dynamischen Druck des auf die Prallplatte einwirkenden Fluids zurückführen.

Mit anderen Worten ist die Messung der Durchflussrate des Oberflächenwassers vom tatsächlichen Eigengewicht bzw. von der tatsächlichen Wasserstandshöhe des Oberflächenwassers über der Prallplatte sowie untergeordnet sekundär von der Strömungsgeschwindigkeit des Fluids abhängig. Je höher die Wasserstandshöhe des Oberflächenwassers über der Prallplatte und dadurch auch das auf die Prallplatte einwirkende Gewicht des Wassers bzw. dessen hydrostatischer Druck, desto höher ist die Durchflussrate des Oberflächenwassers durch den Fluidablauf. Erfindungsgemäß wurde somit herausgefunden, dass zwischen der Durchflussrate des Fluids durch den Fluidablauf und der tatsächlichen Wasserstandshöhe des Wassers über der Prallplatte eine proportionale Beziehung besteht, die in äußerst einfacher Weise eine sehr präzise und kontinuierliche Messung der Durchflussrate des Fluids, respektive des Oberflächenwassers, durch den Fluidablauf ermöglicht.

Ein weiterer wesentlicher Vorteil der Erfindung besteht ferner darin, dass der erfindungsgemäße Gully sehr einfach aufgebaut und dadurch bedingt äußerst wartungsfreundlich ist, so dass im Falle einer Notwendigkeit eines Eingriffs einzelne Komponenten einfach und kostengünstig ausgetauscht werden können.

Gemäß einer bevorzugten Ausführungsform der Erfindung ist die Kraftmessvorrichtung eine Dehnungsmessvorrichtung, die vorzugsweise einen Dehnungsmessstreifen aufweist, wobei die Dehnungsmessvorrichtung zur Messung einer, infolge der Gewichtskraft einer über der Prallplatte lastenden Wassersäule, auftretenden Dehnung eines Abschnitts der Kraftmessvorrichtung dient.

Die durch die Wassersäule des Fluids auf die Prallplatte einwirkende Gewichtskraft verursacht aufgrund der zugfesten bzw. starren Verbindung der Prallplatte mit der Kraftmessvorrichtung, respektive der Dehnungsmessvorrichtung eine Verformung, Streckung und/oder Dehnung eines Dehnungsmessstreifens, welche die auf die Prallplatte wirkenden Gewichtskraft widerspiegelt. Der Einsatz eines Dehnungsmessstreifen ermöglicht somit erfindungsgemäß eine äußerst präzise Messung der auf die Prallplatte einwirkenden Gewichtskraft und somit der Durchflussrate des Fluids durch den Fluidablauf.

Auf diese Weise stellt der erfindungsgemäße Gully eine kostengünstige, kompakte und vielseitig einsetzbare Möglichkeit dar die Durchflussrate eines Fluids durch einen Gully exakt und kontinuierlich zu bestimmen. Des Weiteren sei an dieser Stelle erwähnt, dass anstelle oder auch gemeinsam mit einem Dehnungsmessstreifen erfindungsgemäß auch beispielsweise eine Feder oder eine andere Dehnungsmessvorrichtung eingesetzt werden kann, die, vorteilhafterweise einen linear-elastischen, Bereich aufweist, wobei anhand einer Verformung der Dehnungsmessvorrichtung direkt eine Dehnung und mittelbar eine die Dehnung hervorgerufene Gewichtskraft bestimmbar, und bevorzugt auch ablesbar und/oder elektonisch übermittelbar, ist.

Gemäß einer weiteren bevorzugten Ausführungsform der Erfindung ist die Messeinheit, vorzugsweise mittig, über dem Rohrabschnitt, insbesondere an einem den Fluideinlauf zumindest teil-überspannenden Träger, wie beispielsweise einer Strebe, angeordnet. Eine zentrierte Anordnung der Messeinheit ist erfindungsgemäß vorteilhaft, um präzise Messergebnisse zu erhalten, da auf diese Weise gewährleistet ist, dass die Prallplatte auf welche die Gewichtskraft des Fluids einwirkt, sich mit der Messeinheit entlang einer gemeinsamen vertikalen Achse befindet, so dass die Prallplatte im Wesentlichen zentriert unter der Messeinheit angeordnet ist und auf diese Weise durch abfließendes Fluid gleichmäßig belastet wird.

Des Weiteren ist die Messeinheit erfindungsgemäß vorzugsweise oberhalb einer maximalen Pegelhöhe des durch den Fluidablauf ablaufenden Fluids und/oder in einem fluidgeschützten Bereich der erfindungsgemäßen Vorrichtung angeordnet. Die Anordnung der Messeinheit über dem Rohrabschnitt, insbesondere oberhalb der im normalen Betrieb maximalen Wasserstandshöhe des Oberflächenwassers gewährleistet in erfindungsgemäß vorteilhafter Weise eine gute Zugänglichkeit und Wartbarkeit der erfindungsgemäßen Vorrichtung, respektive der Messeinheit der erfindungsgemäßen Vorrichtung, sowie eine Möglichkeit eines einfachen Austauschs der Messeinheit für den Fall, dass die Messeinheit durch eine andere Messeinheit ersetzt werden soll.

Vorzugsweise ist die Messeinheit mittels eines Verbindungsstücks mit der Prallplatte verbunden. Die Verwendung eines Verbindungsstücks ermöglicht eine Beabstandung der Messeinheit von der Prallplatte und ermöglicht dadurch eine variable Gestaltung der Bau- und Einsatzhöhe der erfindungsgemäßen Vorrichtung. Auf diese Weise ist es in erfindungsgemäß sehr einfacher Weise möglich die Vorrichtung in verschiedenen und insbesondere anpssbaren Größen für verschiedene Schacht- und/oder Gullygrößen sowie sonstige Fluidabläufe anzubieten.

Das Verbindungsstück ist bevorzugt als Stange, Rohr, Draht oder im Wesentlichen nicht dehnbares Seil ausgebildet. Der Vorteil der unterschiedlichen Ausführungsformen des Verbindungsstücks besteht darin, dass je nach Baugröße der Vorrichtung und dadurch auch je nach Intensität der Zugbelastung, erfindungsgemäß unterschiedliche Werkstoffe bzw. unterschiedliche Querschnitte des Verbindungsstücks zur Messung der Gewichtskraft bzw. Durchflussrate eingesetzt werden können. So ist es bei einer Verwendung eines Drahtes oder eines im Wesentlichen nicht dehnbaren Seils erfindungsgemäß beispielsweise möglich, die Messeinheit mittels einer flaschenzugartigen Aufhängung mit der Prallplatte zu verbinden und auf diese Weise, insbesondere im Falle großer auf die Prallplatte einwirkende Gewichtskräfte, eine auf die Messeinheit einwirkende Kraft zu reduzieren.

Gemäß einer bevorzugten Ausführungsform ist das Verbindungsstück in lösbarer Weise fest, insbesondere form- und/oder kraftschlüssig, beispielsweise mittels eines Gewindes sowohl mit der Messeinheit als auch mit der Prallplatte verbunden. Die feste Verbindung des Verbindungsstücks an seinen beiden axialen Enden mit einerseits der Messeinheit und andererseits der Prallplatte ist einerseits kostengünstig realisierbar und ermöglicht andererseits einen verlustfreien Kraftfluss zwischen der Prallplatte und der Messeinheit, so dass die auf die Prallplatte einwirkende Kraft unmittelbar auf die Messeinheit übertragen und von der Messeinheit gemessen werden kann. Des Weiteren erhöht die feste Verbindung des Verbindungsstücks mit der Messeinheit einerseits und mit der Prallplatte andererseits die Gesamtstabilität der Vorrichtung, insbesondere bei großen Messvolumina und/oder hohen Gewichts-, respektive Zugkräften.

Aufgrund der Vorsehung einer lösbaren Verbindung zwischen Messeinheit und Prallplatte ist es erfindungsgemäß in sehr vorteilhafter Weise zudem möglich sowohl die Messeinheit, als auch die Prallplatte und/oder das Verbindungsstück jeweils individuell auf sehr einfache Weise auszutauschen und an etwaige Erfordernisse anzupassen. An dieser Stelle sind beispielsweise ein kürzeres oder längeres Verbindungsstück, eine anders geformte Prallplatte und/oder eine Messeinheit für einen anderen Gewichtsbereich denkbar. Auch zu Wartungszwecken ist eine Austauschbarkeit von Messeinheit, Prallplatte und Verbindungsstück vorteilhaft. Die Verbindung zwischen dem Verbindungsstück und der Messeinheit bzw. mit der Prallplatte kann erfindungsgemäß beispielsweise mittels einer Gewinde-, einer Steck- oder Rast-, oder einer sonstigen Verbindung, wie beispielsweise einem Einhängen der Prallplatte an dem Verbindungsstück und/oder einem Einhängen des Verbindungsstücks an der Messeinheit realisiert sein.

Die Messeinheit und/oder die Kraftmessvorrichtung weist vorzugsweise wenigstens ein Mittel zur elektrischen oder mechanischen Signalübertragung an zumindest ein Empfängermodul auf. Die Übertragung der Messergebnisse bzw. eines umgewandelten Ausgangssignals beispielsweise an wenigstens ein Empfängermodul, insbesondere an eine Rechenvorrichtung eines Abwasserkanalnetzes ermöglicht es, eine Menge des abfließenden Oberflächenwassers bzw. die daraus resultierende Durchflussrate durch einen Fluidablauf kontinuierlich in Echtzeit aus der Ferne messen und/oder überwachen zu können.

Gemäß einer bevorzugten Ausführungsform weist die Prallplatte einen schüssel- oder topfförmigen Abschnitt oder insgesamt eine schüssel- oder topfförmige Form auf. Eine erfindungsgemäß schüssel- oder topfförmige Ausbildung der Prallplatte ist erfindungsgemäß in vorteilhafter Weise zum Filtern bzw. zur Aufnahme von Ablagerungen, Abfällen aus dem Straßenrand und anderen festen Materialien vorgesehen, die im Laufe der Zeit in den Gully gelangen und bei einem Weitertransport in einen Abwasserkanal zu einer möglichen Blockade bzw. Verstopfung des Abwasserkanals führen können.

Des Weiteren ermöglicht eine derartige erfindungsgemäße schüssel- oder topfförmige Ausbildung der Prallplatte eine Einstellung eines Referenz- oder Nullwerts, der sich ergibt, wenn die schlüssel- oder topfförmige Prallplatte gerade bündig mit Wasser gefüllt ist, ohne dass durch abschließendes Fluid bzw. Oberflächenwasser ein zusätzlicher Druck, respektive eine zusätzliche Gewichtskraft, auf die Prallplatte ausgeübt wird. Selbiges wäre erfindungsgemäß prinzipiell auch mit einer scheibenförmigen Prallplatte denkbar, bei welcher Fluid seitlich ablaufen kann, wobei in diesem Falle ein bei einer schüssel- oder topfförmigen Ausbildung der Prallplatte vorteilhafterweise auftretende Geruchsverschluss nicht möglich wäre, wie nachfolgend noch ausgeführt wird. Anhand dieses Referenz- oder Nullwerts kann beispielsweise eine Kalibrierung der erfindungsgemäßen Vorrichtung durchgeführt werden.

Gemäß einer weiteren bevorzugten Ausführungsform ist vorgesehen, dass der Rohrabschnitt im Wesentlichen senkrecht verläuft und vorzugsweise in den schüssel- oder topfförmigen Abschnitt der Prallplatte oder in eine solcherart geformte Prallplatte hineinragt. Ein Vorteil einer Überlappung des Rohrabschnitts mit einem Abschnitt der Prallplatte besteht darin, dass sich dadurch zwischen dem äußeren Rohrabschnitt und der inneren Prallplattenwandung ein Spalt bildet, der eine maximale Ableitung bzw. einen maximalen Durchfluss von Oberflächenwasser, beispielsweise im Falle einer Überflutung, insbesondere bei Starkregenfällen, begrenzt, so dass sich eine Überlastung der Abwasserkanäle bzw. des Abwasserkanalnetzes dadurch verhindern lässt. Des Weiteren führt die Überlappung zu einer Umlenkung einer Ablaufrichtung des Oberflächenwassers, so dass sich im Überlappungsbereich eine Mindestwasserstandshöhe des Oberflächenwassers bildet, die den Zweck eines Geruchsverschlusses erfüllt und dadurch das Heraustreten unangenehmer Gerüche aus dem Abwasserkanal verhindert.

Gemäß einer weiteren bevorzugten Ausführungsform weist die Prallplatte eine seitlich axiale Führung, insbesondere eine Vertikalführung, vorzugsweise entlang eines Gullykörpers auf. Der Vorteil einer seitlich axialen Führung der Prallplatte besteht beispielsweise darin, dass dadurch die Gesamtstabilität der Vorrichtung, insbesondere bei großen Messvolumen bzw. hohen Gewichts- bzw. Zugkräften zusätzlich erhöht wird.

Die Aufgabe der vorliegenden Erfindung wird ferner durch einen Gully mit einem Fluidablauf mit einer zuvor beschriebenen Vorrichtung zur Messung einer Durchflussrate eines Fluids, insbesondere von Oberflächenwasser, gelöst.

Des Weiteren wird die erfindungsgemäße Aufgabe auch durch ein Verfahren zur Messung einer Durchflussrate eines Fluids durch einen Fluidablauf eines Gullys mittels einer zuvor beschriebenen Vorrichtung gelöst, wobei ein Fluideinlauf sowie eine im Wesentlichen senkrecht durch den Fluideinlauf fließende Strömung ausgerichtete Prallplatte zur Verfügung gestellt und die Prallplatte zur Messung einer durch das Fluid auf die Prallplatte wirkenden, insbesondere statischen und/oder dynamischen, Kraft, insbesondere Gewichtskraft mit einer Kraftmessvorrichtung verbunden wird. Die durch das Fluid auf die Prallplatte wirkende Kraft wird mittels einer Kraftmessvorrichtung ermittelt. Des Weiteren wird die durch das Fluid auf die Prallplatte wirkende Kraft erfindungsgemäß mit der Durchflussrate des Fluids, insbesondere von Oberflächenwasser, durch den Fluidablauf korreliert und daraus die effektive Durchflussrate des Fluids bestimmt. In einem zusätzlichen Schritt wird die Übermittlung der effektiven Durchflussrate an ein Empfängermodul bestimmt, wobei die Übermittlung erfindungsgemäß mechanisch oder elektrisch durchgeführt werden kann.

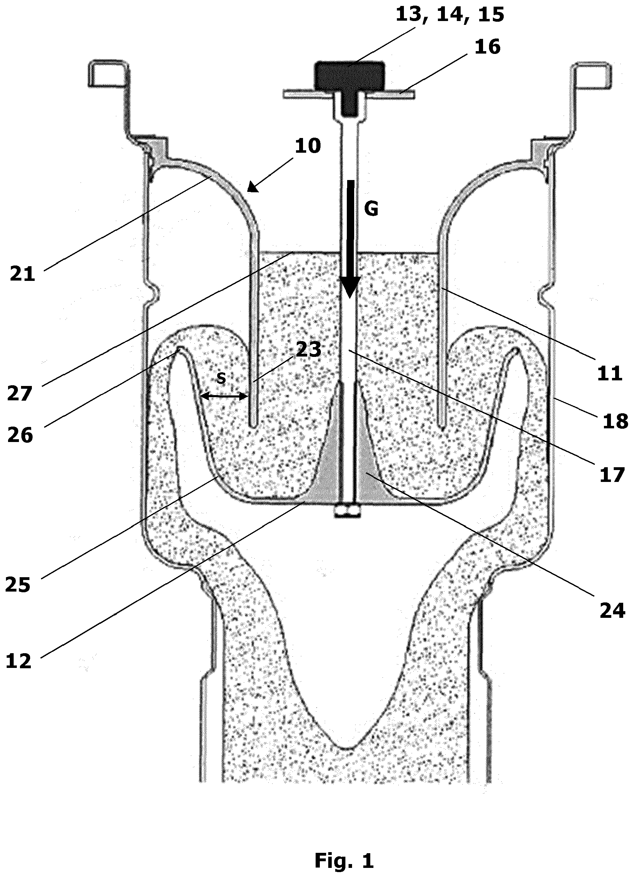

Der Gegenstand der Erfindung wird nachstehend anhand eines Ausführungsbeispiels unter Bezug auf die beigefügte Abbildung näher beschrieben. Hierbei zeigt
- Fig. 1: eine schematische Darstellung einer Schnittansicht der erfindungsgemäßen Vorrichtung gemäß einer bevorzugten Ausführungsform der Erfindung.

In der nachfolgenden Beschreibung werden für gleiche und gleich wirkende Teile dieselben Bezugsziffern verwendet.

Fig. 1 zeigt eine Schnittansicht durch die erfindungsgemäße Vorrichtung gemäß einer bevorzugten Ausführungsform der Erfindung, wobei die Vorrichtung in montiertem und in einem Gully integrierten Betriebszustand dargestellt ist. Die Vorrichtung weist einen Fluideinlauf 10, eine Prallplatte 12, eine Messeinheit 13, eine Kraftmesseinheit 14 und ein Verbindungsstück 17 auf. Der Fluideinlauf 10 dient in erster Linie zur Führung von Fluid, insbesondere von Oberflächenwasser und ist gemäß der vorliegenden Ausführungsform rotationssymmetrisch ausgebildet. Der Fluideinlauf 10 ist mittig, insbesondere zentrisch in dem Gullykörper 18 angeordnet. Der Fluideinlauf 10 umfasst einen Einlaufbereich 21 sowie einen sich an den Einlaufbereich 21 anschließenden im Wesentlichen senkrecht verlaufenden zylindrischen Abschnitt, insbesondere einen im Wesentlichen senkrecht verlaufenden Rohrabschnitt 11. Der Rohrabschnitt 11 des Fluideinlaufs 10 ragt in einen schüssel- oder topfförmigen Abschnitt 23 der Prallplatte 12 hinein, so dass sich der Rohrabschnitt 11 und die Prallplatte 12 im Abschnitt 23 überlappenden. Durch die Überlappung des Rohrabschnitts 11 und der Prallplatte 12 bildet sich ein Spalt S, der die maximale Ableitung bzw. den maximalen Durchfluss des Oberflächenwassers im Falle einer Überflutung, insbesondere bei Starkregenfällen, begrenzt, so dass sich eine Überlastung der Abwasserkanäle bzw. des Abwasserkanalnetzes dadurch verhindern lässt. Der Überlappungsbereich dient, sofern dieser mit Wasser gefüllt ist, des Weiteren als Geruchsverschluss und verhindert das Austreten unangenehmer Gerüche aus dem Inneren des Abwasserkanals.

Die Prallplatte 12 dient in erfindungsgemäß erster Linie einer Aufnahme der durch das abschließende Fluid verursachten Gewichtskraft. Die Prallplatte 12 ist rotationssymmetrisch schüsselförmig ausgebildet. Die Prallplatte 12 weist zur symmetrischen Teilung bzw. zur gleichmäßigen Verteilung des Durchflusses des Oberflächenwassers einen kegelförmigen Materialvorsprung 24 auf. Zur Verbesserung der Strömungseigenschaften bzw. des Durchflusses des Oberflächenwassers, weist die Prallplatte 12 des Weiteren eine bezüglich ihrer Aufhängung nach innen ausgebildete Rundung 25 und eine nach außen ausgebildete Rundung 26 an jeweiligen Strömungsumlenkpunkten auf.

Zur Messung der durch das abfließende Fluid hervorgerufenen und auf die Prallplatte 12 wirkenden Gewichtskraft, weist die Vorrichtung ein Verbindungsstück 17 auf, das des Weiteren zur Beabstandung, insbesondere zugfesten und starren Verbindung der Prallplatte 12 mit der Messeinheit 13 dient. Das Verbindungsstück 17 ist mittels eines Gewindes fest sowohl mit der Messeinheit 13 als auch mit der Prallplatte 12 verbunden. Es ist erfindungsgemäß an dieser Stelle auch möglich, dass das Verbindungsstück 17 mittels einer anderen festen und/oder lösbaren Verbindungsart, beispielsweise anstelle eine Gewindeverbindung mittels einer Stiftverbindung, Klebeverbindung oder eine Pressverbindung, beispielsweise mittels Nieten, mit der Messeinheit 13 und/oder der Prallplatte 12 fest verbunden ist. Gemäß dem vorliegenden Ausführungsbeispiel ist das Verbindungsstück 17 in Fig. 1 als Rohr ausgebildet.

Zur Messung der durch das abschließende Fluid hervorgerufenen und auf die Prallplatte 12 wirkenden Gewichtskraft weist die Vorrichtung eine Messeinheit 13 auf. Die Messeinheit 13 ist mittig, insbesondere konzentrisch zur Rotationsachse des rotationssymmetrischen Fluideinlaufs 10 über dem Rohrabschnitt 11 an einem den Fluideinlauf 10 überspannenden Träger 16 angeordnet. Die Messeinheit 13 ist in einer Aussparung des Trägers 16 passgenau angeordnet. Die Messeinheit 13 ist durch eine Öffnung im Bereich der Aussparung des Träger 16 hindurch, mit dem Verbindungsstück 17 fest verbunden, d.h. verschraubt.

Der Träger 16 ist oberhalb des Fluideinlaufs 10, insbesondere oberhalb des Rohrabschnitts 11, oberhalb einer Wasserstandshöhe 27 angeordnet, um einerseits die Messung der Zugkraft zu ermöglichen und andererseits einen Kontakt der Messeinheit 13 mit dem Oberflächenwasser zu verhindern. Der Träger 16 weist erfindungsgemäß drei Streben, ähnlichen einem Dreibein, auf, die im Wesentlichen 120° voneinander in Umfangsrichtung beabstandet sind und sich jeweils mit einem axialen Ende zur stabilen Aufnahme der Zugkraft, insbesondere der Gewichtskraft, an dem Gullykörper 18 abstützen. Es ist an dieser Stelle erfindungsgemäß vorstellbar, das der Träger 16 mehr oder weniger als drei Streben, die gleichmäßig voneinander beabstandet sind, aufweist, um zur Stabilisierung größerer oder kleinerer Zugkräfte, insbesondere größere oder kleinerer Gewichtskräfte aufnehmen zu können. Auch nur eine einzige Strebe oder Halbstrebe ist in diesem Zusammenhang denkbar.

Des Weiteren liegt es im Umfang der Erfindung, dass die Messeinheit 13 nicht im Wesentlichen zentrisch oberhalb des Rohrabschnitts, sondern an einer anderen geeigneten Position zur Messung der durch die Eigenmasse des Fluids hervorgerufenen und auf die Prallplatte 12 wirkenden Gewichtskraft, angeordnet ist. Beispielsweise kann die Messeinheit 13 seitlich, unterhalb, oberhalb, auf gleicher Höhe der Prallplatte 12 oder in einer seitlich axialen Führung, insbesondere einer Vertikalführung angeordnet sein. Sofern gewünscht, kann die Kraftübertragung von der Prallplatte zu der Messeinheit auch ein oder mehrmals umgelenkt sein.

Die Messeinheit 13 weist eine Kraftmessvorrichtung 14 auf. Die Kraftmessvorrichtung 14 gemäß dem in Fig. 1 dargestellten Ausführungsbeispiel umfasst eine Dehnungsmessvorrichtung 15, die ihrerseits einen Dehnungsmessstreifen zur Messung einer infolge der durch das Fluid verursachten Gewichtskraft auftretenden Dehnung eines Abschnitts der Kraftmessvorrichtung 14 aufweist.

Des Weiteren weist die erfindungsgemäße Vorrichtung wenigstens ein Mittel zur elektrischen oder mechanischen Signalübertragung von erfassten Messergebnissen an wenigstens ein Empfängermodul, beispielsweise an eine zentrale Recheneinheit eines Abwasserkanalnetzes auf. So ist es erfindungsgemäß ferner möglich, die Wasserstandshöhe des Oberflächenwassers bzw. die daraus resultierende Durchflussrate durch den Fluidablauf kontinuierlich in Echtzeit aus der Ferne zu messen und/oder zu überwachen. Es ist vorstellbar, dass das Mittel zur Signalübertragung beispielsweise einen Sensor und/oder einen Wandler und/oder ein GPS-Modul zur eindeutigen Lokalisierung der erfindungsgemäßen Vorrichtung umfasst.

An dieser Stelle sei darauf hingewiesen, dass alle oben beschriebenen Teile für sich alleine gesehen und in jeder Kombination, insbesondere die in den Zeichnungen dargestellten Details, als erfindungswesentlich beansprucht werden. Abänderungen hiervon sind dem Fachmann geläufig.

### Bezuaszeichenliste

- 10: Fluideinlauf
- 11: Rohrabschnitt
- 12: Prallplatte
- 13: Messeinheit
- 14: Kraftmessvorrichtung
- 15: Dehnungsmessvorrichtung
- 16: Träger
- 17: Verbindungsstück
- 18: Gullykörper
- 21: Fluideinlaufbereich
- 23: Abschnitt
- 24: Materialvorsprung
- 25: Nach innen ausgebildete Rundung
- 26: Nach außen ausgebildete Rundung
- 27: Wasserstandshöhe

## Patentansprüche

1. Gully mit einem Fluidablauf mit einer Vorrichtung zur Messung einer Durchflussrate eines Fluids, insbesondere von Oberflächenwasser durch einen Fluidablauf, die eine Messeinheit (13) zur Bestimmung einer Durchflussmenge aufweist, wobei die Vorrichtung einen Fluideinlauf (10) mit einem Rohrabschnitt (11), eine Prallplatte (12) und eine Messeinheit (13) aufweist, wobei die Messeinheit (13) oberhalb der, im Wesentlichen senkrecht zu einer Strömungsrichtung angeordneten, Prallplatte (12) ortsfest angeordnet und zugfest, insbesondere starr, mit der Prallplatte (12) verbunden ist und wobei die Messeinheit (13) eine Kraftmessvorrichtung (14) zur Messung einer durch das Fluid auf die Prallplatte (12) wirkende Gewichtskraft aufweist.

2. Gully nach Anspruch 1,
**dadurch gekennzeichnet, dass**
die Kraftmessvorrichtung (14) eine Dehnungsmessvorrichtung ist, die vorzugsweise einen Dehnungsmessstreifen zur Messung einer infolge der Gewichtskraft auftretenden Dehnung eines Abschnitts der Kraftmessvorrichtung (14) umfasst.

3. Gully nach Anspruch 1 oder 2,
**dadurch gekennzeichnet, dass**
die Messeinheit (13), vorzugsweise mittig, über dem Rohrabschnitt (11), insbesondere an einem den Fluideinlauf (10) zumindest teil-überspannenden Träger (15), wie beispielsweise einer Strebe, angeordnet ist.

4. Gully nach einem der vorhergehenden Ansprüche,
**dadurch gekennzeichnet, dass**
die Messeinheit (13 ) mittels eines Verbindungsstücks (16) mit der Prallplatte (12) verbunden ist.

5. Gully nach Anspruch 4,
**dadurch gekennzeichnet, dass**
das Verbindungsstück (16) als Stange, Rohr, Draht oder im Wesentlichen nicht dehnbares Seil ausgebildet ist.

6. Gully nach Anspruch 4 oder 5,
**dadurch gekennzeichnet, dass**
das Verbindungsstück (16) in lösbarer Weise fest, inbesondere formschlüssig oder kraftschlüssig, beispielsweise mittels einer Gewinde-, einer Steck- oder Rast-, oder einer sonstigen Verbindung, sowohl mit der Messeinheit (13) als auch mit der Prallplatte (12) verbunden ist.

7. Gully nach einem der vorhergehenden Ansprüche,
**dadurch gekennzeichnet, dass**
die Messeinheit (13) und/oder die Kraftmessvorrichtung (14) wenigstens ein Mittel zur elektrischen oder mechanischen Signalübertragung aufweist.

8. Gully nach einem der vorhergehenden Ansprüche,
**dadurch gekennzeichnet, dass**
die Prallplatte (12) einen schüssel- oder topfförmigen Abschnitt aufweist.

9. Gully nach einem der vorhergehenden Ansprüche,
**dadurch gekennzeichnet, dass**
der Rohrabschnitt (11) im Wesentlichen senkrecht verläuft und vorzugsweise in den schüssel- oder topfförmigen Abschnitt der Prallplatte (12) hineinragt.

10. Gully nach einem der vorhergehenden Ansprüche,
**dadurch gekennzeichnet, dass**
die Prallplatte (12) eine seitlich axiale Führung, insbesondere Vertikalführung, vorzugsweise entlang eines Gullikörpers (17), aufweist.

11. Verfahren zur Messung einer Durchflussrate eines Fluids durch einen Fluidablauf eines Gullys mittels einer Vorrichtung nach einem der vorhergehenden Ansprüche,
**gekennzeichnet durch** folgenden Schritte:
- zur Verfügungstellung eines Fluideinlaufs (10) sowie einer im Wesentlichen senkrecht zu einer durch den Fluideinlauf (10) fließenden Strömung ausgerichteten Prallplatte (12);
- Verbinden der Prallplatte (12) mit einer Kraftmessvorrichtung (14) zur Messung einer durch das Fluid auf die Prallplatte (12) wirkenden, insbesondere statischen und dynamischen, Kraft, insbesondere Gewichtskraft;
- Ermitteln der durch das Gewicht des Fluids auf die Prallplatte (12) wirkenden Kraft mittels der Kraftmessvorrichtung (14); und
- Durchführung einer Korrelation der durch das Gewicht des Fluids auf die Prallplatte (12) wirkenden Kraft mit der Durchflussrate des Fluids, insbesondere von Oberflächenwasser, durch den Fluidablauf sowie Bestimmung der effektiven Durchflussrate des Fluids.

12. Verfahren nach Anspruch 11,
**dadurch gekennzeichnet, dass**
das Verfahren einen zusätzlichen Schritt zur Übermittlung der effektiven Durchflussrate an ein Empfängermodul umfasst.

13. Verfahren nach Anspruch 11 oder 12,
**dadurch gekennzeichnet, dass**
die Übermittlung mechanisch oder elektrisch durchgeführt wird.

## Claims

1. Gully comprising a fluid outlet having a device for measuring a flow rate of a fluid, in particular of surface water through a fluid outlet, which has a measuring unit (13) for determining a flow rate, wherein the device has a fluid inlet (10) with a pipe section (11), a baffle plate (12) and a measuring unit (13), wherein the measuring unit (13) is arranged above the baffle plate (12), which is disposed substantially perpendicular to a flow direction, in a stationary manner and is connected to the baffle plate (12) in a tension-proof, in particular rigid manner, and wherein the measuring unit (13) has a force measuring device (14) for measuring a weight force acting on the baffle plate (12) by the fluid.

2. Gully according to claim 1,
**characterized in that**
the force measuring device (14) is a strain measuring device, which preferably comprises a strain gauge for measuring an elongation of a section of the force measuring device (14) occurring as a result of the weight force.

3. Gully according to claim 1 or 2,
**characterized in that**
the measuring unit (13) is arranged, preferably centrally, above the pipe section (11), in particular on a support (15), such as a strut, which at least partially spans the fluid inlet (10).

4. Gully according to one of the preceding claims,
**characterized in that**
the measuring unit (13) is connected to the baffle plate (12) by means of a connecting piece (16).

5. Gully according to claim 4,
**characterized in that**
the connecting piece (16) is designed as a rod, tube, wire or substantially non-stretchable rope.

6. Gully according to claim 4 or 5,
**characterized in that**
the connecting piece (16) is firmly connected to both the measuring unit (13) and the baffle plate (12) in a detachable manner, in particular in a form-fitting or force-fitting manner, for example by means of a threaded connection, a plug-in connection, a latching connection or another connection.

7. Gully according to one of the preceding claims,
**characterized in that**
the measuring unit (13) and/or the force measuring device (14) has at least one means for electrical or mechanical signal transmission.

8. Gully according to one of the preceding claims,
**characterized in that**
the baffle plate (12) has a bowl-shaped or pot-shaped section.

9. Gully according to one of the preceding claims,
**characterized in that**
the pipe section (11) extends essentially vertically and preferably projects into the bowl- or pot-shaped section of the baffle plate (12).

10. Gully according to one of the preceding claims,
**characterized in that**
the baffle plate (12) has a lateral axial guide, in particular a vertical guide, preferably along a gully body (17).

11. Method for measuring a flow rate of a fluid through a fluid outlet of a gully by means of a device according to one of the preceding claims, **characterized by** the following steps of:
- providing a fluid inlet (10) and a baffle plate (12) aligned substantially perpendicular to a flow passing through the fluid inlet (10);
- connecting the baffle plate (12) to a force measuring device (14) for measuring a force, in particular a static and dynamic force, in particular a weight force, acting on the baffle plate (12) through the fluid;
- determining the force acting on the baffle plate (12) due to the weight of the fluid by means of the force measuring device (14); and
- performing a correlation of the force acting on the baffle plate (12) due to the weight of the fluid with the flow rate of the fluid, in particular of surface water, through the fluid outlet and determining the effective flow rate of the fluid.

12. Method according to claim 11,
**characterized in that**
the method comprises an additional step of transmitting the effective flow rate to a receiver module.

13. Method according to claim 11 or 12,
**characterized in that**
the transmission is carried out mechanically or electrically.

## Revendications

1. Puisard comprenant une sortie de fluide avec un dispositif pour mesurer un débit d'un fluide, en particulier d'eaux de surface traversant une sortie de fluide, qui comporte une unité de mesure (13) pour la détermination d'une quantité débitée, dans lequel le dispositif comporte une entrée de fluide (10) avec une longueur de tuyau (11), une chicane (12) et une unité de mesure (13), dans lequel l'unité de mesure (13) est placée à demeure au-dessus de la chicane (12) disposée de façon sensiblement perpendiculaire à un sens d'écoulement et reliée à la chicane (12) de façon résistante à la traction, en particulier rigide, et dans lequel l'unité de mesure (13) comporte un dispositif de mesure de la force (14) destiné à mesurer le poids exercé par le fluide sur la chicane (12).

2. Puisard selon la revendication 1, **caractérisé en ce que** le dispositif de mesure de la force (14) est un dispositif de mesure de l'allongement qui comprend de préférence une bande extensométrique pour la mesure d'un allongement d'une partie du dispositif de mesure de la force (14) résultant du poids.

3. Puisard selon la revendication 1 ou 2, **caractérisé en ce que** l'unité de mesure (13) est disposée, de préférence au centre, au-dessus de la longueur de tuyau (11), en particulier sur un support (15) qui s'étend au moins en partie par-dessus l'entrée de fluide (10), par exemple sur une entretoise.

4. Puisard selon l'une des revendications précédentes, **caractérisé en ce que** l'unité de mesure (13) est reliée à la chicane (12) au moyen d'une pièce de liaison (16).

5. Puisard selon la revendication 4, **caractérisé en ce que** la pièce de liaison (16) est conformée comme une barre, un tube, un fil métallique ou un câble sensiblement inextensible.

6. Puisard selon la revendication 4 ou 5, **caractérisé en ce que** la pièce de liaison (16) est fixée de façon amovible à l'unité de mesure (13) aussi bien qu'à la chicane (12), en particulier par engagement positif ou friction, par exemple au moyen d'un assemblage fileté, emboîté ou enclenché ou autre.

7. Puisard selon l'une des revendications précédentes, **caractérisé en ce que** l'unité de mesure (13) et/ou le dispositif de mesure de la force (14) comportent au moins un moyen pour la transmission électrique ou mécanique de signaux.

8. Puisard selon l'une des revendications précédentes, **caractérisé en ce que** la chicane (12) comporte une partie en forme d'auge ou de pot.

9. Puisard selon l'une des revendications précédentes, **caractérisé en ce que** la longueur de tuyau (11) est sensiblement verticale et dépasse de préférence dans la partie en forme d'auge ou de pot de la chicane (12).

10. Puisard selon l'une des revendications précédentes, **caractérisé en ce que** la chicane (12) comporte un guide axial latéral, en particulier un guide vertical, de préférence le long d'un corps de puisard (17).

11. Procédé pour la mesure d'un débit d'un fluide passant par une sortie de fluide d'un puisard au moyen d'un dispositif selon l'une des revendications précédentes, **caractérisé en ce qu'**il comporte les étapes suivantes :
- mise à disposition d'une entrée de fluide (10) et d'une chicane (12) orientée de façon sensiblement perpendiculaire à un écoulement passant à travers l'entrée de fluide (10) ;
- liaison de la chicane (12) avec un dispositif de mesure de la force (14) pour la mesure d'une force, en particulier statique et dynamique, exercée par le fluide sur la chicane (12), en particulier d'un poids ;
- détermination de la force exercée par le poids du fluide sur la chicane (12) au moyen du dispositif de mesure de la force (14) et
- détermination d'une corrélation entre la force exercée par le poids du fluide sur la chicane (12) et le débit de fluide, en particulier d'eaux de surfaces, passant à travers la sortie de fluide, et détermination du débit effectif du fluide.

12. Procédé selon la revendication 11, **caractérisé en ce qu'**il comprend une étape supplémentaire de transmission du débit effectif à un module récepteur.

13. Procédé selon la revendication 11 ou 12, **caractérisé en ce que** la transmission est effectuée de façon mécanique ou électrique.
